# EUROPEAN PATENT SPECIFICATION

(11) **EP 4 426 511 B1**
(45) Date of publication and mention of the grant of the patent: **09.09.2026**
(21) Application number: 22797453.2
(22) Date of filing: 19.10.2022
(51) Int. Cl.: B23K 26/12, B23K 26/16, B23K 26/24, B23K 26/70

(54) **LASER WELDING APPARATUS**
LASERSCHWEISSVORRICHTUNG
APPAREIL DE SOUDAGE AU LASER

(30) Priority: 01.11.2021 GB 202115644
(43) Date of publication of application: 11.09.2024
(73) Proprietor: Aquasium Technology Limited, Cambridge, Cambridgeshire CB25 9QX (GB)
(72) Inventor: O'FARRELL, Alex, Cambridge Cambridgeshire CB25 9QX (GB); NOBLE, Aaron, Cambridge Cambridgeshire CB25 9QX (GB)
(74) Representative: Sharrock, Daniel John
(86) International application number: PCT/GB2022/052671
(87) International publication number: WO 2023/073347

(56) References cited:
- DE-B3- 102005 005 707
- DE-B4- 102015 016 674
- JP-A- 2004 188 451
- JP-A- H10 242 072
- US-A1- 2010 154 558
- US-A1- 2017 246 709

## Description

### Field of the Invention

This invention relates to a laser welding apparatus, and in particular such apparatus undertaking welds in a vacuum (see as example JP H10 242072 A).

### Background to the Invention

Laser welding of metallic components using high powered disc and fibre lasers has become common place in automotive and aerospace manufacturing industries because laser welding gives very low heat input into a part compared with some other welding techniques. This leads to a higher weld quality and less distortion of a manufactured part.

Typically a laser is coupled into a transmission fibre for delivery of laser energy to the welding tooling, with the laser radiation focused to a fine spot through a convex optical lens so that an intense spot of heat is generated which vaporises material to create a keyhole weld. A flat cover glass acting as a protective window is generally positioned between the optical lens and the part being welded to protect the lens from weld vapour and spatters generated by the weld.

The protective window is relatively expensive to replace and so shielding gases are often used to assist in keeping the protective window clean and also to interrupt the generation of a plasma plume above the keyhole weld. The plasma plume is generated by the intense heat of the weld laser vaporising the material and the local atmosphere and once the plume is established, it can cause a significant portion of the laser beam to be scattered which then requires the laser to input more power to achieve the same weld penetration. However using more input power widens the weld profile and puts more heat into the part being welded, so reducing weld quality and increasing distortion.

Shielding gas is only partially effective at reducing the detrimental plasma plume and to improve laser welding often welding takes place within a vacuum chamber because the reduced atmosphere prevents the plasma plume from being able to establish outside of the weld keyhole. The vacuum also decreases the boiling point of the material being welded so reducing the amount of power required to create a keyhole weld, and the lack of air particles creates a reduction in weld porosity. In vacuum laser welding an extra vacuum laser transmission window is disposed in the path between the focal lens and the protective window, so maintaining the seal for the vacuum chamber.

During vacuum laser welding if the protective window becomes contaminated by weld vapour, the transmissivity of the window will start to drop and any reduction in transmission will mean a reduction in weld intensity. As more vapour deposits and solidifies on the window, it will absorb the laser energy and will rapidly heat up causing deformation and failure of the weld. To prevent contamination of the protective window, a gas such as argon is often introduced at a low flow rate into the vacuum chamber adjacent to the protective window to prevent the vapour particles from reaching the protective window.

Introducing gas into a vacuum chamber weld creates problems that are detrimental to some of the advantages gained by welding in a vacuum chamber. The introduction of the gas requires a more powerful pump set to maintain a high vacuum in the chamber making it uneconomical and, in some cases, impossible to reach high vacuum levels. Due to the scattering of gas particles upon entering the chamber, some will interact and combine with the weld vapour to create a soot that leads to an undesirable weld finish that is unacceptable when welding materials in some industries.

### Summary of the Invention

In accordance with the invention, there is provided a laser welding apparatus according to claim 1.

By ionising such particles, also known as weld vapour, to ensure the particles are electrically charged, deflection of the particles is possible using electric and/or magnetic fields. This enables the weld vapour to be deflected to impinge on another surface, such as a wall of the chamber, rather than impinging on the transparent region where over time particle build-up would take place, impairing the weld process and necessitating replacement of the transparent region.

The ionisation means may comprise at least one electron discharge means, such as an electrode or heated filament, and may comprise one or more discharge electrodes capable of directing electrons to the weld region.

The ionisation means may comprise first and second electrodes arranged to generate a high voltage arc across a laser beam.

Preferably the ionisation means or ionisation apparatus and deflection means or deflection apparatus are positioned between the weld region and the transparent region, the ionisation means positioned closer to the weld region than the deflection means.

The laser welding apparatus according to the invention further comprises one or more microwave or RF cavities disposed between the weld region and the transparent region, ensuring electrons generated by the ionisation means circulate within the laser beam and so provide more effective ionisation of the weld vapour.

At least one ring magnet may be disposed between the weld region and the ionisation means to assist in intensifying the ionisation stage to ensure all weld vapour is ionised.

The deflection means or deflection apparatus may comprise electrostatic field generation means or electrostatic field generation apparatus.

Preferably the electrostatic field generation means or electrostatic field generation apparatus comprises one or more electrically conductive plates at a positive voltage.

The electrostatic field generation means or electrostatic field generation apparatus may comprise one or more electrically conductive plates at a negative voltage.

The deflection means or deflection apparatus may comprise magnetic field generation apparatus, such as one or more permanent magnets or electromagnets.]

The laser welding apparatus may further comprise a voltage supply attached to the transparent region to maintain the transparent region at a positive voltage.

The invention will now be described by way of example and with reference to the accompanying drawings in which:
Figure 1 shows a schematic diagram of a first embodiment of laser welding apparatus;
Figure 2 shows a schematic diagram of a second embodiment of laser welding apparatus; and
Figure 3 shows a schematic diagram of a third embodiment of laser welding apparatus.

### Description

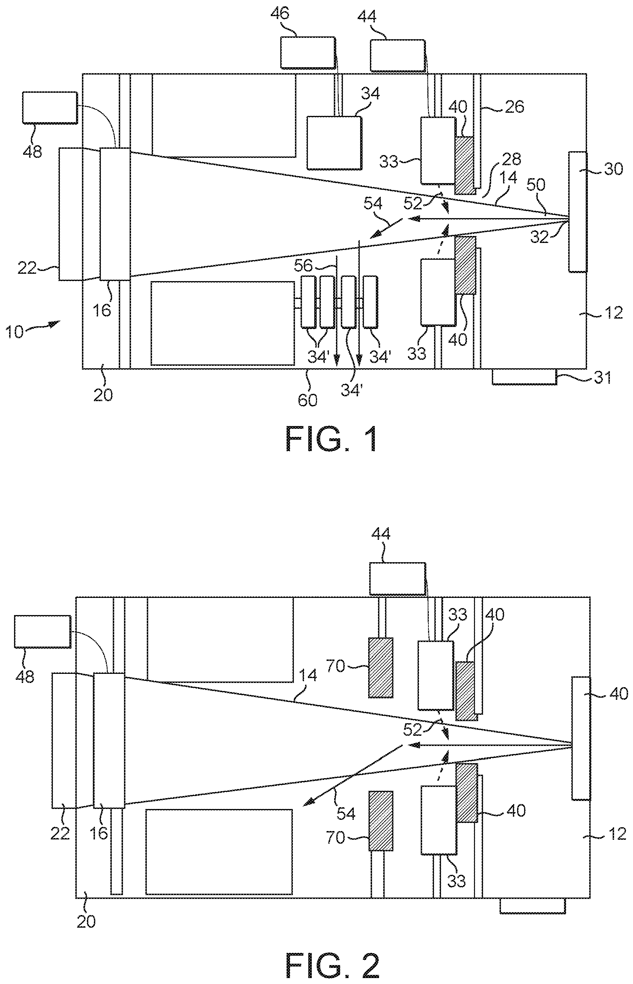

Laser welding apparatus 10 as shown schematically in Figure 1 comprises an evacuatable welding chamber 12 into which a beam of laser radiation 14 is directed through protective window 16. Adjoining chamber 12 adjacent protective window 16 is an additional vacuum chamber 20 to ensure the integrity of the vacuum within main chamber 12. Vacuum window 22 is provided in a wall of subsidiary chamber 20 and overlies the position of protective window 16 so that laser beam 14 can be focussed to a fine image using a convex lens (not shown) outside chambers 12 and 20 and proximal vacuum window 22. Baffle 26 defines an aperture 28 within chamber 12 through which beam 14 passes to reach a part 30 to be welded. One or more pumps 31 are provided to evacuate chambers 12 and 20 and to maintain a high vacuum.

In use, laser beam 14 is focussed to a fine spot 32 on part 30 so as to create a keyhole weld.

Within main chamber 12 a pair of ionisation electrodes 33, typically made of a refractory material such as Molybdenum, are positioned between welded part 30 and protective window 16 so as to create an ionisation discharge arc, typically greater than 1000V. Charged positive and negative deflection plates 34, 34' are disposed between ionisation electrodes 33 and protective window 16, such that ionisation electrodes 33 are closer to weld 32 than deflection plates 34, 34' and deflection plates 34, 34' are closer to protective window 16 than ionisation electrodes 33. An optional ring magnet 40 can be disposed between baffle 26 and electrodes 33.

Electrodes 33 and deflection plates 34, 34' are maintained at a high voltage, typically around +/-7kV, using high voltage supply units 44, 46 and if desired an optional additional high voltage supply unit 48 can be connected to protective window 16 to maintain window 16 at a positive voltage and further enhance deflection of ionised vapour away from window 16. Deflection plates 34, 34' are arranged as positive 34 and negative 34' plates on opposing sides of the pathway of laser beam 14 and so create an electrostatic potential gradient across chamber 12 in a direction substantially perpendicular to the direction of travel of laser beam 14.

During welding, particles 50 known as weld vapour will be emitted from part 30 during the weld process and in prior art apparatus would gradually contaminate protective window 16. In apparatus 10, weld vapour 50 undergoes an ionisation stage to remove some electrons and so become ionised with a small positive charge and then a deflection stage to substantially prevent vapour 50 reaching window 16. The ionised vapour can then be deflected using magnetic or electrostatic fields to hit the wall of chamber 12 or a collector before the vapour reaches protective window 16.

As vapour 50 travels from part 30 towards protective window 16 it becomes ionised due to electrons 52 from a high voltage arc passing between the pair of electrodes 33 interacting with vapour 50 to produce ionised vapour 54. Ionised vapour 54 is then deflectable under the influence of electrostatic deflection plates 34, 34' towards chamber sidewalls 60, see arrow 56, where the vapour can be deposited without impairing visibility through window 16. Ionisation electrodes 33 and deflection plates 34, 34' are positioned within chamber 12 such that ionised vapour 54 cannot recombine with other particles and so lose its charge before deflection has taken place.

Figure 2 is an alternative embodiment where one or more deflector magnets 70 are used instead of electrostatic deflection plates 34, 34' with ionised vapour 54 again deflected away from window 16 with the intensity of the magnetic fields sufficient to deflect the ionised vapour to hit the wall of chamber 12 or a collector instead of reaching window 16. The deflector magnets 70 typically generate a magnetic field greater than 0.5 Tesla.

Providing a separate ionisation stage and deflection stage internally within chamber 12 avoids the need for a gas to be fed into a vacuum chamber to protect window 16. Any weld vapour travelling towards protective window 16 becomes ionised vapour and then is trapped or deflected using magnets 70 and/or electrostatic deflectors 34, 34'.

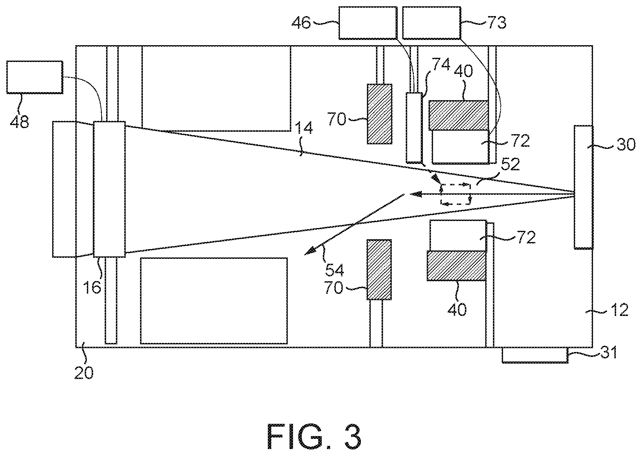

A third embodiment shown in Figure 3 uses an RF cavity 72 with associated RF amplifier 73 where electrons 52 from rod electrode 74, or alternatively electrons from a source of electron emission such as a heated filament, are circulated within the RF cavity to ionise any vapour emitted from the weld. Magnets 70 are used to deflect the ionised vapour 54 to impinge on the walls of chambers 12 or into a collector.

The ionisation stage can consist of one of or a combination of the following configurations:
1. A high voltage arc that can be discharged across the path between the weld keyhole 32 and protective window 16 as shown in Figure 1. Such an arc can be generated by an electrode arrangement 33 and/or a filament held at high voltage and heated to the point of thermionic electron emission.
2. A high voltage arc that is discharged from an electrode to part 30 being welded. This discharge electrode can be a rod 74 as shown in Figure 3 or a ring-type electrode. This arc will take the path of least resistance into the keyhole of the weld and the power of the arc can be sufficient to be used for hybrid laser-arc welding if required. Again a filament held at high voltage and so heated to the point of thermionic electron emission can be used instead of or as well as such an electrode.
3. A microwave or radio cavity 72 to assist with the ionisation of vapour 50, as shown in the third embodiment shown in Figure 3.

As shown in Figures 1 to 3, additional ring magnets 40 can be placed in the ionisation stage to assist in intensifying the ionisation to ensure all weld vapour is ionised.

The deflection stage for the ionised vapour can consist of one of or a combination of the following configurations:
1. One or multiple plates 34 held at a high positive voltage proximal to the protective window to deflect vapour away from the plates 34, see Figure 1.
2. One or multiple plates 34' held at a high negative voltage proximal to protective window 16 to attract the ionised vapour towards the plates 34', these can be arranged to create slotted or gridded collectors, see Figure 1.
3. An electromagnet or permanent magnet 70 placed adjacent or surrounding the vapour path with the field lines orientated such that the ionised vapour interacts and is deflected away from protective window 16, see Figures 2 and 3.
4. The protective window electrically isolated from the chamber held at high positive voltage to deflect vapour away from the window, as shown in Figures 1 to 3.

## Claims

1. Laser welding apparatus (10) comprising an evacuatable chamber (12) incorporating a transparent region (16) through which laser radiation (14) is transmissible to heat a weld region (32) on a workpiece (30), wherein ionisation means (33) is disposed within the chamber (12) to ionise any particles emitted from the weld region (32) and deflection means (34; 70) is disposed within the chamber (12) and is configured to deflect ionised particles (54) away from the transparent region (16)
**characterised in that** it further comprises one or more microwave or RF cavities (72) disposed between the weld region (32) and the transparent region (16).

2. Laser welding apparatus according to claim 1, wherein the ionisation means (33) comprises at least one electron discharge means.

3. Laser welding apparatus according to claim 1, wherein the ionisation means (33) comprises one or more discharge electrodes capable of directing electrons to the weld region.

4. Laser welding apparatus according to claim 2, wherein the ionisation means (33) comprises first and second electrodes arranged to generate a high voltage arc across a laser beam.

5. Laser welding apparatus according to any of the preceding claims, wherein the ionisation means (33) and deflection means (34; 70) are positioned between the weld region (32) and the transparent region (16), the ionisation means (33) positioned closer to the weld region (32) than the deflection means (34; 70).

6. Laser welding apparatus according to any of the preceding claims, further comprising at least one ring magnet disposed between the weld region and the ionisation means.

7. Laser welding apparatus according to any of the preceding claims, wherein the deflection means comprises electrostatic field generation means (34, 34').

8. Laser welding apparatus according to claim 7, wherein the electrostatic field generation means (34, 34') comprises one or more electrically conductive plates at a positive voltage.

9. Laser welding apparatus according to claim 7, wherein the electrostatic field generation means (34, 34') comprises one or more electrically conductive plates at a negative voltage.

10. Laser welding apparatus according to any of claims 1 to 6, wherein the deflection means comprises magnetic field generation apparatus.

11. Laser welding apparatus according to any of the preceding claims, further comprising a voltage supply (48) attached to the transparent region (16) to maintain the transparent region at a positive voltage.

## Patentansprüche

1. Laserschweißvorrichtung (10), die eine auszupumpende Kammer (12) umfasst, die einen transparenten Bereich (16) enthält, der für Laserstrahlung (14) zum Erwärmen eines Schweißgebiets (32) auf einem Werkstück (30) durchlässig ist, wobei innerhalb der Kammer (12) ein Ionisationsmittel (33) angeordnet ist, um jegliche Partikel zu ionisieren, die von dem Schweißgebiet (32) emittiert werden, und wobei innerhalb der Kammer (12) ein Ablenkmittel (34; 70) angeordnet ist und dazu ausgelegt ist, ionisierte Partikel (54) von dem transparenten Gebiet (16), weg abzulenken, **dadurch gekennzeichnet, dass** sie ferner einen oder mehrere Mikrowellen- oder HF-Hohlräume (72) umfasst, die zwischen dem Schweißgebiet (32) und dem transparenten Gebiet (16) angeordnet sind.

2. Laserschweißvorrichtung nach Anspruch 1, wobei das Ionisationsmittel (33) mindestens ein Elektronenentladungsmittel umfasst.

3. Laserschweißvorrichtung nach Anspruch 1, wobei das Ionisationsmittel (33) eine oder mehrere Entladungselektroden umfasst, die in der Lage sind, Elektronen zu dem Schweißgebiet zu leiten.

4. Laserschweißvorrichtung nach Anspruch 2, wobei das Ionisationsmittel (33) eine erste und eine zweite Elektrode umfasst, die angeordnet sind, um einen Hochspannungslichtbogen über einen Laserstrahl zu erzeugen.

5. Laserschweißvorrichtung nach einem der vorhergehenden Ansprüche, wobei das Ionisationsmittel (33) und das Ablenkmittel (34; 70) zwischen dem Schweißgebiet (32) und dem transparenten Bereich (16) positioniert sind, wobei das Ionisationsmittel (33) näher als das Ablenkmittel (34; 70) an dem Schweißgebiet (32) positioniert ist.

6. Laserschweißvorrichtung nach einem der vorhergehenden Ansprüche, die ferner mindestens einen Ringmagneten umfasst, der zwischen dem Schweißgebiet und dem Ionisationsmittel angeordnet ist.

7. Laserschweißvorrichtung nach einem der vorhergehenden Ansprüche, wobei das Ablenkmittel ein Mittel (34, 34') zum Erzeugen eines elektrostatischen Felds umfasst.

8. Laserschweißvorrichtung nach Anspruch 7, wobei das Mittel (34, 34') zum Erzeugen eines elektrostatischen Felds eine oder mehrere elektrisch leitfähige Platten auf einer positiven Spannung umfasst.

9. Laserschweißvorrichtung nach Anspruch 7, wobei das Mittel (34, 34') zum Erzeugen eines elektrostatischen Felds eine oder mehrere elektrisch leitfähige Platten auf einer negativen Spannung umfasst.

10. Laserschweißvorrichtung nach einem der Ansprüche 1 bis 6, wobei das Ablenkmittel eine Magnetfelderzeugungsvorrichtung umfasst.

11. Laserschweißvorrichtung nach einem der vorhergehenden Ansprüche, die ferner eine Spannungsversorgung (48) umfasst, die an dem transparenten Gebiet (16) angebracht ist, um das transparente Gebiet auf einer positiven Spannung zu halten.

## Revendications

1. Appareil de soudage au laser (10) comprenant une enceinte pouvant être mise sous vide (12) incorporant une région transparente (16) à travers laquelle un rayonnement laser (14) peut être transmis pour chauffer une région de soudure (32) sur une pièce (30), un moyen d'ionisation (33) étant disposé à l'intérieur de l'enceinte (12) afin d'ioniser toutes les particules émises par la région de soudure (32) et un moyen de déviation (34 ; 70) étant disposé à l'intérieur de l'enceinte (12) et étant configuré pour dévier les particules ionisées (54) à l'écart de la région transparente (16), **caractérisé en ce qu'**il comprend en outre une ou plusieurs cavités à micro-ondes ou à radiofréquences (72) disposées entre la région de soudure (32) et la région transparente (16).

2. Appareil de soudage au laser selon la revendication 1, dans lequel le moyen d'ionisation (33) comprend au moins un moyen de décharge d'électrons.

3. Appareil de soudage au laser selon la revendication 1, dans lequel le moyen d'ionisation (33) comprend une ou plusieurs électrodes de décharge capables de diriger des électrons vers la région de soudure.

4. Appareil de soudage au laser selon la revendication 2, dans lequel le moyen d'ionisation (33) comprend des première et deuxième électrodes agencées de manière à générer un arc à haute tension à travers un faisceau laser.

5. Appareil de soudage au laser selon l'une quelconque des revendications précédentes, dans lequel le moyen d'ionisation (33) et le moyen de déviation (34 ; 70) sont positionnés entre la région de soudure (32) et la région transparente (16), le moyen d'ionisation (33) étant positionné plus près de la région de soudure (32) que le moyen de déviation (34 ; 70).

6. Appareil de soudage au laser selon l'une quelconque des revendications précédentes, comprenant en outre au moins un aimant annulaire disposé entre la région de soudure et le moyen d'ionisation.

7. Appareil de soudage au laser selon l'une quelconque des revendications précédentes, dans lequel le moyen de déviation comprend un moyen de génération de champ électrostatique (34, 34').

8. Appareil de soudage au laser selon la revendication 7, dans lequel le moyen de génération de champ électrostatique (34, 34') comprend une ou plusieurs plaques électriquement conductrices qui sont à une tension positive.

9. Appareil de soudage au laser selon la revendication 7, dans lequel le moyen de génération de champ électrostatique (34, 34') comprend une ou plusieurs plaques électriquement conductrices qui sont à une tension négative.

10. Appareil de soudage au laser selon l'une quelconque des revendications 1 à 6, dans lequel le moyen de déviation comprend un appareil de génération de champ magnétique.

11. Appareil de soudage au laser selon l'une quelconque des revendications précédentes, comprenant en outre une alimentation en tension (48) connectée à la région transparente (16) afin de maintenir la région transparente à une tension positive.
